# EUROPÄISCHE PATENTSCHRIFT

(11) **EP 2 700 517 B1**
(45) Veröffentlichungstag und Bekanntmachung des Hinweises auf die Patenterteilung: **11.04.2018**
(21) Anmeldenummer: 13004021.5
(22) Anmeldetag: 13.08.2013
(51) Int. Cl.: B60G 17/005, F41A 23/34, F41A 27/30

(54) **Rad- oder Kettenfahrzeug mit einer aufgebauten, Schüsse in schneller Abfolge abgebenden Maschinenwaffe**
Wheeled or tracked vehicle with a mounted machine gun which fires shots in rapid sequence
Véhicule à roues ou à chaînes doté d'une arme automatique montée, délivrant des tirs en séquence rapide

(30) Priorität: 22.08.2012 DE 102012016724
(43) Veröffentlichungstag der Anmeldung: 26.02.2014
(73) Patentinhaber: Diehl Defence GmbH & Co. KG, 88662 ÜBERLINGEN (DE)
(72) Erfinder: Pfersmann, Axel, DE - 90537 Feucht (DE); Reisinger, Ingo, DE - 90552 Röthenbach (DE)
(74) Vertreter: Diehl Patentabteilung

(56) Entgegenhaltungen:
- EP-A1- 2 088 010
- DE-A1- 3 039 366
- DE-A1- 3 407 193
- DE-A1- 19 803 370
- DE-B- 1 091 905
- DE-C- 652 025

## Beschreibung

Die Erfindung betrifft ein Rad- oder Kettenfahrzeug mit einer aufgebauten, Schüsse in schneller Abfolge abgebenden Maschinenwaffe, sowie einem fahrzeugseitig vorgesehenen Fahrwerk, über das eine Beweglichkeit des die Maschinenwaffe tragenden Fahrzeugaufbaus relativ zum Räder- oder Kettenwerk gegeben ist, wozu fahrwerkseitig mehrere ein Einfedern ermöglichende Rad- oder Kettenradaufhängungen vorgesehen sind.

Aus der DE-B-1091905 ist eine Abfederung für mittels Laufketten angetriebene Panzerkampfwagen bekannt. Die Federsteifigkeit des hydropneumatischen Federungssystems kann hier während des Schießens durch das Abkoppeln von zweiten Druckkammern erhöht werden. Aus der EP-A-2088010 ist eine Federung für einen gezogenen Artilleriewagen bekannt.

Rad- oder Kettenfahrzeuge der in Rede stehenden Art sind als sehr variabel einsetzbare Fahrzeuge konzipiert, die es aufgrund ihrer nicht allzu ausladenden Größe ermöglichen, sehr wendig und flexibel einsetzbar zu sein. Mit ihrer Maschinenwaffe, die in der Lage ist, Schüsse in schneller Abfolge mit einer Frequenz von mehreren Schüssen pro Sekunde abzugeben, können sie Ziele sehr effektiv bekämpfen, sind aber aufgrund ihrer geringen Größe und Wendigkeit selbst relativ schwer zu bekämpfen. In Rede stehende Rad- oder Kettenfahrzeuge sind entweder als üblicherweise zwei-achsige, mehr oder weniger stark gepanzerte Kraftfahrzeuge bekannt, oder als kleine, gepanzerte Kettenfahrzeuge. Sie weisen einen Fahrzeugaufbau, der die Maschinenwaffe trägt, auf, der über ein Fahrwerk umfassend entsprechende Rad- oder Kettenradaufhängungen relativ zum Räder- oder Kettenwerk beweglich ist und einfedern kann.

Um einerseits weit entfernte Ziele überhaupt bekämpfen zu können, und andererseits auch entsprechend gepanzerte Ziele bekämpfen zu können, wird versucht, die Maschinenwaffe möglichst großkalibrig auszulegen. Dies ist zwar grundsätzlich möglich, jedoch ergeben sich beim Schießen aufgrund der gegebenen inhärenten Beweglichkeit des Fahrzeugs selbst dahingehend Probleme, als dass der Fahrzeugaufbau nebst Maschinenwaffe, die zuvor auf das Ziel eingestellt wurde, mit Beginn der Kadenz aufgrund der aus den einzelnen Rückstößen der Schüsse resultierenden, auf den Fahrzeugaufbau und über diesen auf die Rad- oder Kettenradaufhängungen gegebenen Kräfte relativ zum Rad- oder Kettenradwerk einfedert. Es kommt also zu einer Relativbewegung des Fahrzeugaufbaus nebst Maschinenwaffe zu den bodenseitig aufstehenden Rädern oder Ketten, der Fahrzeugaufbau "knickt" quasi ein. Hieraus resultiert zwangsläufig, dass die zuvor ausgerichtete Waffe aus dem Ziel wandert, das heißt, dass das Schussbild eine beachtliche Streuung zeigt. Dabei kann die aus der Nick- oder Wankbewegung des Fahrzeugaufbaus resultierende Streuung oder Ablage auch abhängig davon variieren, ob die Maschinenwaffe während des Schießens in Fahrtrichtung oder quer zur Fahrtrichtung ausgerichtet ist. Bei einem zwei-achsigen Räderfahrzeug, das einen relativ langen Radstand besitzt, ist die Streuung bzw. Ablage bei Schießen in Fahrtrichtung deutlich geringer als bei Schießen quer zur Fahrtrichtung, was aus dem deutlich geringeren Räderabstand in den jeweiligen Achsen resultiert. Bei einem Kettenfahrzeug mit relativ kurzen Ketten, wie sie bei in Rede stehenden, kleinen Kettenfahrzeugen üblich sind, sind die Verhältnisse eher anders herum, da beim Schießen in Fahrzeuglängsrichtung die bodenseitig aufliegende Kettenlänge kürzer ist als der Kettenabstand, das heißt, dass das Fahrzeug beim Schießen quer zur Fahrtrichtung besser abgestützt ist.

Unabhängig davon sind die gegebenen Ablagen sehr groß, so dass einerseits das Ziel nicht allzu wirksam bekämpft werden kann, andererseits ist, selbst bei sehr kurzen Kadenzen, trotz allem ein sehr hoher Munitionsbedarf trotz geringer Trefferanzahl gegeben.

Der Erfindung liegt damit das Problem zugrunde, ein Rad- oder Kettenfahrzeug mit einer aufgebauten Maschinenwaffe anzugeben, das trotz üblichem Fahrwerksaufbau ein Schießen mit verbesserter Treffgenauigkeit ermöglicht.

Zur Lösung dieses Problems ist bei einem Rad- oder Kettenfahrzeug der eingangs genannten Art erfindungsgemäß vorgesehen, dass nur zum Schießen das Einfederverhalten zumindest eines Teils der Rad- oder Kettenradaufhängungen derart veränderbar ist, dass eine einfederbedingte Bewegung der Maschinenwaffe reduziert wird.

Erfindungsgemäß ist vorgesehen, das Einfederverhalten der Rad- oder Kettenradaufhängungen zu verändern, so dass es während des Schießens nicht zu derart starken Nick- oder Wankbewegungen kommt, wie sie bei bisher bekannten Rad- oder Kettenfahrzeugen gegeben sind. Dem liegt die Überlegung zugrunde, dass die in Rede stehenden Rad- oder Kettenfahrzeuge ohnehin nur im Stand schießen können, anders als Panzerfahrzeuge, die mit ihren Kanonen im Einzelfeuer und mit entsprechenden Stabilisierungsvorrichtungen auch während der Fahrt schießen können. Die in Rede stehenden Rad- oder Kettenfahrzeuge stehen jedoch beim Schießen. In diesem Fall werden folglich auch die Rad- oder Kettenradaufhängungen, die üblicherweise beim Fahren das erforderliche Einfedern zum Ausgleich von Bodenunebenheiten etc. ermöglichen, letztlich nicht benötigt, können also in ihrer Einfedercharakteristik respektive in ihrem Einfederverhalten temporär und nur für das unmittelbar nachfolgende Schießen verändert werden. Wird das Einfederverhalten verändert, wird also zumindest bei einem Teil der Rad- oder Kettenaufhängungen eine Steifigkeitserhöhung veranlasst, die das Einfedern teilweise, weitestgehend oder gänzlich reduziert oder verhindert, so kommt es folglich auch zu einer weit geringeren Bewegung der Maschinenwaffe, auch wenn hohe Rückstoßkräfte von der Maschinenwaffe auf den Fahrzeugaufbau gegeben werden. Nickt oder wankt die Maschinenwaffe nur gering oder im Idealfall nicht, wirkt sich dies zwangsläufig auf das Schussbild aus, die gegebene Ablage nimmt deutlich ab, die Bekämpfung wird wesentlich effizienter, der Munitionsbedarf sinkt.

Die erfindungsgemäß vorgesehene temporäre "Versteifung" des Fahrwerks, die komplett an allen Rad- oder Kettenradaufhängungen oder nur an einzelnen, also punktuell, erfolgen kann, wird nur während des Schießens vorgenommen. Sobald das Rad- oder Kettenfahrzeug in Schussposition ist, wird, beispielsweise durch Betätigung eines entsprechenden Bedienelements seitens des Schützen, die entsprechende Aufhängungsveränderung respektive Fahrwerksversteifung initiiert, woraufhin mit dem Schießen begonnen werden kann. Nach Beendigung des Schießens wird die vorgenommene "Fahrwerksversteifung" wieder aufgehoben, das heißt, dass die einzelnen Aufhängungen wieder ihr normales Federverhalten zeigen, woraufhin das Fahrzeug unmittelbar wieder seine Position wechseln kann.

Hinsichtlich der Art der "Fahrwerksversteifung" zur Reduzierung der Nick- oder Wankbewegungen sind unterschiedliche Erfindungsausgestaltungen denkbar. Nach einem ersten -nicht zur Erfindung gehörigen Erläuterungsbeispiel kann jede Rad- oder Kettenradaufhängung einen Stoßdämpfer mit zugeordneter Feder aufweisen, wobei zur Veränderung des Einfederverhaltens eine Bewegung des Stoßdämpfers oder der Feder durch eine mit dem Stoßdämpfer und/oder der Feder zusammenwirkende zuschaltbare Arretiereinrichtung mechanisch blockierbar ist. Gemäß diesemBeispiel ist also den Rad- oder Kettenradaufhängungen oder zumindest einem Teil davon eine mechanische Arretiereinrichtung zugeordnet, die bei Bedarf zur Fahrwerksversteifung zugeschaltet werden kann. Diese Arretiereinrichtung wirkt mit dem Stoßdämpfer und/oder der Feder zusammen und bewirkt eine tatsächliche mechanische Blockierung. Diese Blockierung kann derart sein, dass ausgehend von der momentanen Radaufhängungsposition überhaupt keine Relativbewegung mehr möglich ist, oder nur eine definierte, jedoch verglichen mit der aufhängungsspezifischen maximalen Beweglichkeit reduzierte Beweglichkeit bis in die Blockadeposition. Beim Schießen kommt es sodann nur zu einer deutlich geringeren Nick- oder Wandbewegung, die aufgrund der gegebenen Rückstoßkräfte natürlich nicht vollständig unterbunden werden kann, jedoch verglichen mit im Stand der Technik bekannten Rad- oder Kettenfahrzeugen wesentlich geringer ausfällt.

Eine Arretiereinrichtung, die die beispielsgemäße mechanische Blockade erwirken kann, kann ein pneumatisch, hydraulisch oder elektrisch betätigbares Arretierelement aufweisen, das automatisch reversibel in die Arretierstellung bringbar ist, in welcher es den Stoßdämpfer oder die Feder entsprechend blockiert. Dieses Arretierelement kann nun bei Betätigen eines Bedienelements entsprechend pneumatisch, hydraulisch oder elektrisch über ein geeignetes Stellelement betätigt werden. Nach dem Schießen wird das Arretierelement, beispielsweise durch erneute Betätigung eines Bedienelements, wieder gelöst und der Stoßdämpfer respektive die Feder wieder freigegeben.

Erfindungsgemäß ist vorgesehen, dass die Vorspannung der Feder, die die jeweilige Rad- oder Kettenradaufhängung aufweist, zur Veränderung des Einfederverhaltens verändert wird. Dies kann beispielsweise dadurch erfolgen, dass der als Schraubenfeder ausgebildeten Feder wenigstens ein beweglicher Federteller zugeordnet ist, der bei benutzerseitigem Betätigen eines Bedienelements über ein Stellelement, insbesondere einen Elektromotor mit zugeordnetem Gewindetrieb, zur stärkeren Komprimierung der Feder bewegbar ist. Mit einer Erhöhung der Federvorspannung geht letztlich eine Reduzierung der maximalen Einfederbeweglichkeit einher, d. h., dass die Feder nicht mehr derart weit einfedern kann, wie ursprünglich. Diese Vorspannungsveränderung kann über einen linear beweglichen Federteller, der beispielsweise über einen Kugelgewindetrieb in Verbindung mit einem Elektromotor bewegt werden kann, erreicht werden. Besonders zweckmäßig ist es dabei, wenn die Feder ein Progressiv-Verhalten aufweist, wonach die Federkraft überproportional mit dem Weg zunimmt. Wird die Feder komprimiert, so kann aufgrund dieses progressiven Verhaltens letztlich die zur weiteren Komprimierung erforderlicher Kraft überproportional vergrößert werden. D. h., dass der Kraft-Weg-Zusammenhang nicht linear ist. Wird die Federvorspannung verhindert, ändert sich folglich auch das Nick- oder Wankverhalten, d. h., der Fahrzeugaufbau schwingt zwangsläufig in etwas anderer Weise, nämlich deutlich weniger, relativ zu den Rädern oder den Ketten.

Gemäß einem weiteren nicht zur Erfindung gehörigen Erläuterungsbeispiel kann jede in ihrem Einfederverhalten veränderbare Rad- oder Kettenradaufhängung eine Luftfeder aufweisen, deren Füllgrad zur Veränderung des Einfederverhaltens automatisch veränderbar ist. Auch dieses Beispiel sieht eine Veränderung der Luftfedern selbst vor. Luftfedern zeigen von Haus aus ein Progressiv-Verhalten, d. h., dass die Federkraft mit zunehmendem Luftdruck im Inneren des Federbalges überproportional mit dem Weg zunimmt. Erfindungsgemäß kann nun, wenn der Schütze ein Bedienelement betätigt, der Luftdruck in den Luftfedern derart stark erhöht werden, dass diese wenn überhaupt nur gering einfedern können. Auch in diesem Fall resultiert ein deutlich geringeres Schwingvermögen des Fahrzeugaufbaus relativ zum Rad- oder Kettenwerk, woraus wiederum auch eine geringere Bewegung der Maschinenwaffe selbst resultiert.

Dabei ist es denkbar, dass der Druck der Luftfedern zum Versteifen des Fahrwerks auf ein definiertes Niveau angehoben wird, wenn der Schütze oder der Fahrer das Bedienelement unmittelbar vor dem Schuss betätigt. D. h., dass - ähnlich wie bei der zuvor beschriebenen Bewegung des Federtellers - ein definierter Endzustand automatisch eingestellt wird, in dem definierte Randbedingungen hinsichtlich des Einfederverhaltens der jeweiligen Rad- oder Kettenradaufnehmung gegeben sind.

Eine weitere Erfindungsalternative, die aber auch kumulativ mit der Veränderung der Federvorspannung respektive der Veränderung des Verhaltens der Luftfedern genutzt werden kann, sieht vor, die Dämpfungscharakteristik eines Stoßdämpfers, den jede Rad- oder Kettenradaufhängung aufweist, zur Veränderung des Einfederverhaltens der Radaufhängung automatisch zu verändern. Anders als die Feder, die grundsätzlich die federnde Beweglichkeit sicherstellt, ist der Dämpfer für die Bewegungsdämpfung verantwortlich, letzthin also dem Abbau der Schwingungen dient. Erfindungsgemäß kann nun durch, gegebenenfalls auch zusätzliche, Veränderung der Dämpfungscharakteristik des Stoßdämpfers gleichermaßen vorteilhaft eine Versteifung der jeweiligen Radaufhängung erreicht werden. Denn es ist grundsätzlich denkbar, im Bedarfsfall, also zum Schießen, die Dämpfungscharakteristik so einzustellen, dass die Stoßdämpfer überhaupt nur eine geringe Beweglichkeit zulassen. Dies kann durch eine Veränderung des Drucks innerhalb des jeweiligen Stoßdämpfers erfolgen, was beispielsweise durch elektronisch regelbare Proportionalventile, die den Ölfluss im Dämpferrohr innerhalb von Sekundenbruchteilen verengen, um eine harte Dämpfung zu erzielen, ermöglicht wird. Die stufenlose Einstellbarkeit eines solchen Ventils und die rasche Dämpferkraftanpassung ermöglicht eine variable Verstellung der Dämpferrate. Alternativ ist auch die Verwendung magnetorheologischer Flüssigkeiten denkbar. Hierbei handelt es sich um Suspensionen von kleinen magnetischen Partikeln, die in einer Trägerflüssigkeit suspendiert sind. Wird an eine solche magnetorheologische Flüssigkeit ein externes Magnetfeld angelegt, so ändert sich aufgrund einer Ausrichtung der Partikel im Magnetfeld die Viskosität der Flüssigkeit und damit auch die Dämpferkraft extrem schnell, drastisch und reversibel. Mit zunehmender Viskosität der Flüssigkeit steigt zwangsläufig die Dämpfungskraft, einer Änderung um bis zu mehr als zwei Größenordnungen ist ohne Weiteres möglich.

Insgesamt kommt also, unabhängig davon, ob nun ein ölbasiertes System oder ein magnetorheologisch basiertes System verwendet wird, eine adaptive Dämpfung zum Einsatz, die eine breitbandige Dämpferbeeinflussung zulässt.

Zweckmäßig ist es, wenn wenigstens ein Bewegungssensor vorgesehen ist, der eine Bewegung des Fahrzeugaufbaus erfasst und abhängig von dessen Erfassungsergebnis die Dämpfercharakteristik regelbar ist. D. h., dass, vorzugsweise für jede Radaufhängung separat, ein entsprechender Regelkreis mit Sensor vorgesehen ist. Sobald der Bewegungssensor eine Bewegung ermittelt, wird die Dämpfungscharakteristik des zugeordneten Stoßdämpfers gezielt so verändert, dass die gegebene Schwingung kompensiert wird respektive definiert verläuft. Auf diese Weise kann folglich unmittelbar auf jede Bewegung reagiert werden, indem die Dämpfungscharakteristik gezielt verändert wird.

Besonders zweckmäßig ist es, wenn sowohl eine Veränderung der Federeigenschaften hinsichtlich der Feder als auch eine Veränderung der Dämpfercharakteristik vorgesehen ist. Die beidseitige Veränderbarkeit ist insbesondere in Verbindung mit einer stabilisierten Maschinenwaffe zweckmäßig. Eine solche stabilisierte Maschinenwaffe weist eine zugeordnete Stabilisationsvorrichtung auf, die sicherstellt, dass die Maschinenwaffe trotz gegebener Nick- oder Wankbewegung stabil auf das Ziel ausgerichtet bleibt. Bei großen Maschinenwaffen jedoch kann es vorkommen, dass die Einfederbewegung so groß ist, dass die Federn auf Block laufen und es in diesem Fall zu einem starken Schlag, der sich auf die Maschinenwaffe auswirkt, kommt. Diesen kann eine solche Stabilisierungsvorrichtung nicht mehr kompensieren. Ist jedoch die Einfederbewegung durch entsprechende Veränderung der Charakteristiken seitens der Feder und des Stoßdämpfers verändert und ein auf Block laufen ausgeschlossen, so kann über die Stabilisationsvorrichtung trotz leichter Nick- oder Wankbewegungen auch beim Schießen mit beachtlich großen Maschinenwaffen eine hohe Treffergenauigkeit erreicht werden.

Weitere Vorteile, Merkmale und Einzelheiten der Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Radfahrzeugs,
- Fig. 2: eine Prinzipdarstellung einer ersten, nicht erfindungsgemäßen, Ausführungsform zur temporären Fahrwerkversteifung,
- Fig. 3: eine Prinzipskizze einer zweiten Ausführungsform einer erfindungsgemäßen Fahrwerkversteifung,
- Fig. 4: ein Diagramm zur Darstellung des ohne und mit Fahrwerkversteifung durch Blockieren eines Stoßdämpfers oder einer Feder gegebenen Schwingverhaltens des Fahrzeugaufbaus,
- Fig. 5: ein Diagramm zur Darstellung des ohne und mit Verändern der Dämpfungscharakteristik des Stoßdämpfers gegebenen Schwingverhalten des Fahrzeugaufbaus, und
- Fig. 6: ein Diagramm zur Darstellung des ohne und mit Verändern der Federvorspannung sowie der Dämpfercharakteristik gegebenen Schwingverhaltens des Fahrzeugaufbaus.

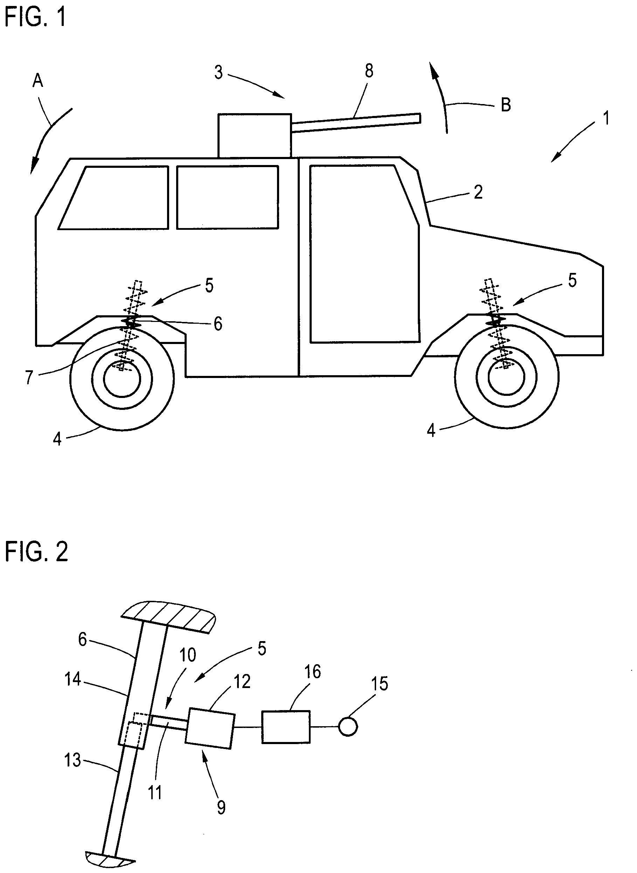

Fig. 1 zeigt ein erfindungsgemäßes Radfahrzeug 1, umfassend einen Fahrzeugaufbau 2 mit einer Maschinenwaffe 3, die in der Lage ist, Schüsse in schneller Abfolge abzugeben. Üblich sind mehrere, beispielsweise fünf bis zehn Schüsse oder mehr pro Sekunde. Es handelt sich um eine automatische Waffe, die von einem im Fahrzeug sitzenden Schützen bedient werden kann.

Der Fahrzeugaufbau 2 ist über ein Fahrwerk mit den vier Rädern 4 verbunden, wobei das Fahrwerk über jeweils eine Radaufhängung 5 mit jeweils einem Rad 4 beweglich verbunden ist. Jeder Radaufhängung umfasst einen Stoßdämpfer 6 sowie eine hier als Schraubenfeder ausgeführte Feder 7, wobei Stoßdämpfer 6 und Feder 7 in bekannter Weise fahrzeugaufbauseitig wie auch achsseitig festgelegt sind.

Die Maschinenwaffe 3 erzeugt, wenn hinreichend großkalibrig ausgelegt, hohe Rückstoßkräfte, die, nachdem die Maschinenwaffe 3 am Fahrzeugaufbau 2 angeordnet ist, auf den Fahrzeugaufbau 2 übertragen werden. Dieser nickt nun, wie durch den Pfeil A dargestellt ist, aufgrund der gegebenen Rückstoßkräfte ein, d. h., dass die beiden hinteren Radaufhängungen 5 bzw. deren Stoßdämpfer 6 und Federn 7 etwas einfedern, während im Gegenzug die vorderen Radaufhängungen 5 etwas ausfedern können. Der Fahrzeugaufbau 2 führt also quasi eine nach hinten gerichtete Einknickbewegung durch. Dieses Absenken nach hinten führt dazu, dass der Lauf 8 der Maschinenwaffe 3, wie durch den Pfeil B dargestellt ist, etwas nach oben geschwenkt wird. Damit ändert sich aber beim Schießen zwangsläufig die Ausrichtung des Laufes 8, etwaige während dieser Bewegung abgegebene Schüsse landen folglich zwangsläufig nicht im ursprünglich anvisierten Ziel.

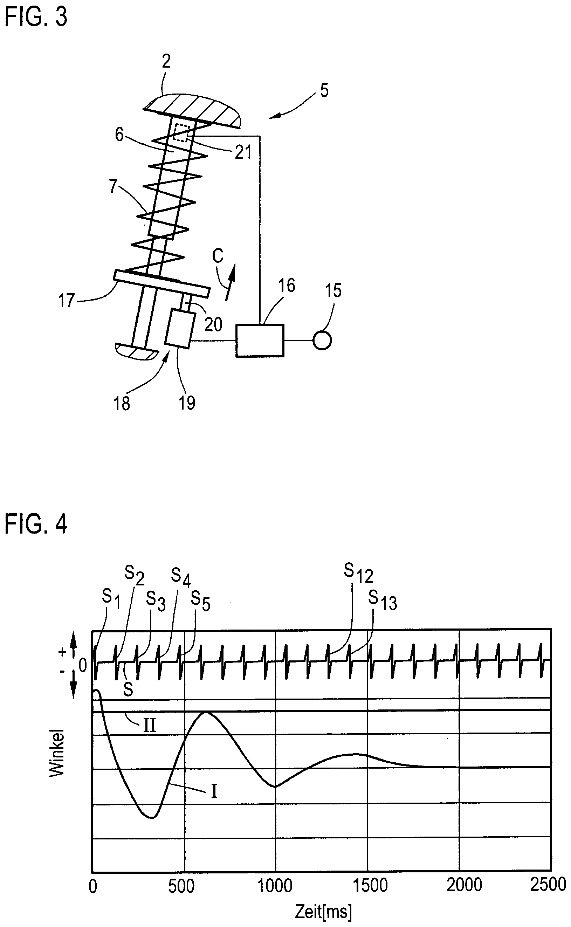

Der Fahrzeugaufbau 2 führt bei Schießen einer hinreichend langen Kadenz, die sich beispielsweise über 1,5 bis 2,5 Sekunden unter Abgabe einer hinreichenden Anzahl an Einzelschüssen erstreckt, quasi eine Schwingbewegung durch, nachdem der Fahrzeugaufbau 2 zunächst nach hinten einfedert, wieder etwas ausfedert und letztendlich eine Einschwinglage einnimmt. Dieses Verhalten ist exemplarisch in den Fig. 4, 5 und 6, auf die bereits vorgreiflich verwiesen wird, durch die jeweilige, mit l gekennzeichnete Kurve dargestellt. In entsprechender Weise schwingt auch der Lauf 8 quasi auf und ab. Das Schussbild wandert folglich, die Ablage ist schwingungsbedingt relativ groß, zumindest bis sich die Einschwingposition eingestellt hat. Üblicherweise wird diese jedoch höchst selten erreicht, da die Kadenz nicht derart lang ist, dass sich der Fahrzeugaufbau überhaupt einschwingen kann. Vielmehr werden zumeist nur kürzere Feuerschüsse abgegeben. D. h., dass aufgrund der, siehe die Fig. 4 bis 6, gegebenen hohen Schwingamplituden folglich während der eigentlichen Schießzeit gravierende Laufbewegungen gegeben sind.

Um dem entgegenzuwirken, ist nun erfindungsgemäß vorgesehen, dass nur zum Schießen eine Veränderung des Feder- respektive Bewegungsverhaltens zumindest bei einigen der Radaufhängungen 5 erwirkt wird. Die Möglichkeit, diese Veränderung vorzunehmen, sollte zweckmäßigerweise bei allen Radaufhängungen 5 des in Fig. 1 gezeigten Radfahrzeugs 1 gegeben sein, denn es ist grundsätzlich möglich, die Maschinenwaffe 3 nicht nur in Fahrtrichtung, sondern auch entgegengesetzt nach hinten auszurichten, so dass entsprechende Veränderungen an den vorderen Radaufhängungen 5 vorzunehmen sind, wie auch zu den beiden Seiten, so dass die an der jeweiligen Fahrzeugseite befindlichen Radaufhängungen 5 zu verändern sind.

Grundsätzlich besteht die Möglichkeit, die Beweglichkeit über eine mechanische Arretierung entweder komplett ausgehend von der momentanen Stellung zu blockieren, oder nur ein wegbegrenztes Bewegen in einer Blockierstellung zuzulassen. Alternativ ist es aber auch denkbar, die Eigenschaften der Feder 7, insbesondere gemäß der Erfindung ihre Vorspannung, zu verändern, und/oder die Dämpfungscharakteristik des Stoßdämpfers, wie nachfolgend erläutert wird.

Fig. 2 zeigt in Form einer Prinzipdarstellung eine Radaufhängung 5 bzw. den Stoßdämpfer 6, die Feder ist aus Übersichtlichkeitsgründen hier nicht gezeigt. Dem Stoßdämpfer 6 ist eine mechanische Arretiereinrichtung 9 zugeordnet, hier mit einem Arretierelement 10 in Form eines Bolzens 11, der über ein Stellelement, beispielsweise einen Elektromotor 12, in und aus dem Stoßdämpfer 6 bewegt werden kann. Die durchgezogene Position zeigt den eingezogenen Bolzen 11, die gestrichelte den ausgefahrenen Bolzen 11, dieser ist also in der Blockierstellung. Ersichtlich befindet er sich sodann oberhalb des Kolbens 13 des Stoßdämpfers 6, so dass dieser nicht weiter in den Zylinder 14 des Stoßdämpfers bewegt werden kann. Werden beispielsweise, ausgehend vom Beispiel gemäß Fig. 1 die beiden hinteren Radaufhängungen 5 in eben dieser Weise arretiert, so ist folglich die rückwärtige Einknickbewegung, wie durch den Pfeil A dargestellt, nur reduziert möglich, nämlich immer soweit, bis die Zylinder 13 am Bolzen 11 anschlagen. Die Schwingung, wie sie zu Beginn eines Schusses eingeleitet wird, siehe die Kurven I, findet folglich nicht statt, eine Relativbewegung vom Fahrzeugaufbau 2 zu den Rädern 4 ist nur insoweit möglich, als eine gewisse Restbeweglichkeit, die fahrzeugimmanent ist, noch gegeben ist. In jedem Fall kommt es nicht zu der Durchführung der Schwingbewegung. Dabei können sämtliche Radaufhängungen 5 in dieser Weise mechanisch arretiert werden, so dass sich quasi eine vollständige Versteifung ergibt.

Um diese Arretierung respektive Blockierung zu ermöglichen, ist im Fahrzeug ein Bedienelement 15, beispielsweise ein Schalter oder Ähnliches, vorgesehen, der mit einer Steuerungseinrichtung 16 kommuniziert, die wiederum den jeweiligen oder alle Elektromotoren 12 ansteuert, um die jeweiligen Bolzen 11 in die Blockierstellung auszufahren.

Diese Stellung ist selbstverständlich reversibel, eine erneute Betätigung des Bedienelements 15 führt dazu, dass nach dem Schuss die Arretierung wieder aufgehoben wird und die Radaufhängungen 5 wie üblich einfedern können.

Fig. 3 zeigt wie das Dämpfungs- oder Schwingverhalten einer Radaufhängung 5 erfindungsgemäß bedarfsabhängig zum Schießen verändert werden kann. Gezeigt ist wiederum der Stoßdämpfer 6 sowie die ihn umgebende Feder 7. Die Feder 7 ist an einem Ende am Fahrzeugbau 2 abgestützt, das untere Ende ruht auf einem Federteller 17, der über eine nicht näher gezeigte Führung über ein Stellelement 18, beispielsweise einen Elektromotor 19 mit zugeordnetem Gewindetrieb 20, längs des Stoßdämpfers 6 beweglich ist, d. h., dass der Abstand des Federtellers 17 zum Gegenlager am Fahrzeugaufbau verringert werden kann. Wird der Federteller 17 in Richtung des Pfeils C bewegt, so ändert sich die Federlänge, die Feder wird also komprimiert. Ist die Feder eine progressive Feder, die einen nicht-linearen Kraft-Feder-Zusammenhang aufweist, so kann durch Komprimieren der Feder 7 das Einfederrespektive Schwingverhalten einer Radaufhängung 5 verändert werden. Die Feder wird also quasi härter, indem sie komprimiert wird. Sie kann also nicht mehr soweit einfedern, die Schwingung, die sich einstellen würde, wird flacher. Zusätzlich dazu ist gemäß Fig. 3 vorgesehen, auch das Dämpfungsverhalten des Stoßdämpfers 6 zu variieren. Gezeigt ist gestrichelt beispielsweise ein im Stoßdämpfer 6 integriertes Proportionalventil 21, das den Ölfluss im Stoßdämpfer 6 steuert. Dieses kann zur Veränderung der Dämpfercharakteristik verengt werden, so dass der Ölfluss reduziert wird, die Dämpfung wird insgesamt härter. Ist als Dämpfungsfluid eine magnetorheologische Flüssigkeit vorgesehen, so kann, gegebenenfalls zusätzlich zu dem Proportionalventil 21, auch eine Magnetfelderzeugungseinrichtung vorgesehen sein, die ein Magnetfeld erzeugt, das mit den magnetischen Partikeln der magnetorheologischen Flüssigkeit wechselwirkt und die Viskosität der Flüssigkeit schlagartig erhöht, so dass die Dämpfung ebenfalls deutlich härter wird.

Wird nun die Dämpfungscharakteristik verändert, so kann eine aus den Eigenschaften der Federn resultierende mögliche Schwingung gezielt bedämpft respektive abgebaut werden, so dass es, resultierend aus der geänderten Dämpferwirkung, nicht zur Ausbildung einer sinusförmigen Schwingung kommt. Vielmehr kann hierüber erreicht werden, dass es zu einer stetigen, sich jedoch sehr schnell auf einen konstanten Wert einstellenden geringen Einknickbewegung kommt, ohne dass es zu einem sinusförmigen Hin- und Herschwingen kommt.

Diese entsprechenden Veränderungen können wiederum durch Betätigen eines Bedienelements 15 durch den Schützen oder den Fahrer initiiert werden. Die Steuerungseinrichtung 16 steuert wiederum entweder das Stellelement 18 zur Bewegung des Federtellers 17, und/oder das Proportionalventil 21 (und/oder, sofern vorgesehen, die Magneterzeugungseinrichtung, wenn eine magnetorheologische Flüssigkeit als Dämpferflüssigkeit vorgesehen ist). Wenngleich gemäß Fig. 3 sowohl die Veränderung seitens der Feder als auch die seitens des Dämpfers vorgesehen ist, ist es denkbar, auch nur eine von beiden vorzusehen.

Insgesamt ergibt sich, dass folglich auch über diese Mittel die einzelnen Radaufhängungen 5 in ihrer Einfeder- respektive Bewegungscharakteristik verändert werden können.

Welche Auswirkungen die Veränderungen auf das Bewegungsverhalten des Fahrzeugaufbaus haben, ist exemplarisch in den Fig. 4 bis 6 gezeigt.

Fig. 4 zeigt ein Diagramm, in dem längs der Abszisse die Zeit in ms aufgetragen ist, und längs der Ordinate der Einknickwinkel des Fahrzeugaufbaus relativ zur Räderebene. Bei 0 befindet sich der Fahrzeugaufbau quasi parallel zur Räderebene. Nach unten, wie durch das Symbol "-" angedeutet, knickt der Fahrzeugaufbau nach hinten um die hinteren Radaufhängungen 5 ein, nach oben, durch das "+"-Symbol dargestellt, schwingt der Fahrzeugaufbau quasi nach vorne.

Dargestellt ist durch die obere Linie S die Schussabfolge. Im Zeitpunkt t = 0 wird der erste Schuss S₁ abgegeben, gefolgt vom zweiten Schuss S₂, dem dritten Schuss S₃ etc. Ersichtlich ist eine relativ hochfrequente Schussfolge gegeben, im gezeigten Ausführungsbeispiel werden innerhalb einer Sekunde neun Schuss abgegeben, wobei dies lediglich exemplarisch ist.

Unmittelbar mit Beginn des ersten Schusses S₁ und der daraus auf den Fahrzeugaufbau 2 gegebenen Rückstoßkraft kommt es zu einer Einfederbewegung im Bereich der hinteren Radaufhängungen 5, d. h., dass sich das Heck des Fahrzeugs absenkt. Dies ist durch den abfallenden Ast der Kurve I ersichtlich. Diese Absenkbewegung verläuft bis ca. zum vierten abgegebenen Schusses S₄. Zu diesem Zeitpunkt sind die beiden hinteren Radaufhängungen 5 maximal eingefedert. Aus dieser Position federn sie wieder etwas aus, d. h., der Fahrzeugaufbau 2 schwingt wieder etwas nach vorne. Diese Schwingbewegung ist bis zur Abgabe ungefähr des sechsten Schusses S₆ abgeschlossen, wonach der Fahrzeugaufbau wieder zurückschwingt. Es ergibt sich quasi eine über den jeweiligen Stoßdämpfer 6 gedämpfte Sinusschwingung, die sich einschwingt. Ab ca. 1500 ms zeigt die Kurve I quasi keine Schwingbewegung mehr, d. h., dass der Fahrzeugaufbau in einer definierten Einfederposition relativ zu den Rädern verharrt. Bis diese Einschwenkposition erreicht ist, sind im gezeigten Beispiel jedoch bereits ca. dreizehn Schüsse abgegeben worden. Während dieser dreizehn Schüsse bewegt sich der Lauf 8 der Maschinenwaffe 3 beachtlich, abhängig von der gegebenen Schwingung gemäß Kurve I.

Um dies zu vermeiden, wird nun, wie grundsätzlich in der Prinzipdarstellung und Beschreibung zur Fig. 2 erläutert, beispielsweise durch mechanische Blockierung ein Schwingen entweder nur der hinteren Radaufhängungen 5 oder aller Radaufhängungen 5 unterbunden. Dies führt dazu, dass mit dem ersten Schuss S₁ der Fahrzeugaufbau 2 ein kurzes Stück nach hinten nickt, bis die Aufhängungsblockierung greift, ein weiteres Einnicken ist nicht mehr möglich. Wie die Kurve II in Fig. 4 zeigt, bleibt der Fahrzeugaufbau in dieser Position, er bleibt also auf Block und verändert trotz weiterer abgegebener Schüsse seine Position nicht. Die über die Einzelschüsse eingetragenen Rückstoßkräfte wirken einer möglichen, wenngleich geringen Rückbewegung des Fahrzeugaufbaus 2 entgegen, es stellen sich also quasi-stationäre Verhältnisse ein. Die quasi-stationären Verhältnisse stellen sich, wie die Kurve II zeigt, bereits unmittelbar nach Abgabe des ersten Schusses ein, während sie sich, wie zuvor beschrieben, ohne die erfindungsgemäße Fahrwerksblockierung erst nach ca. 1500 ms, also nach Abgabe des dreizehnten Schusses einstellen.

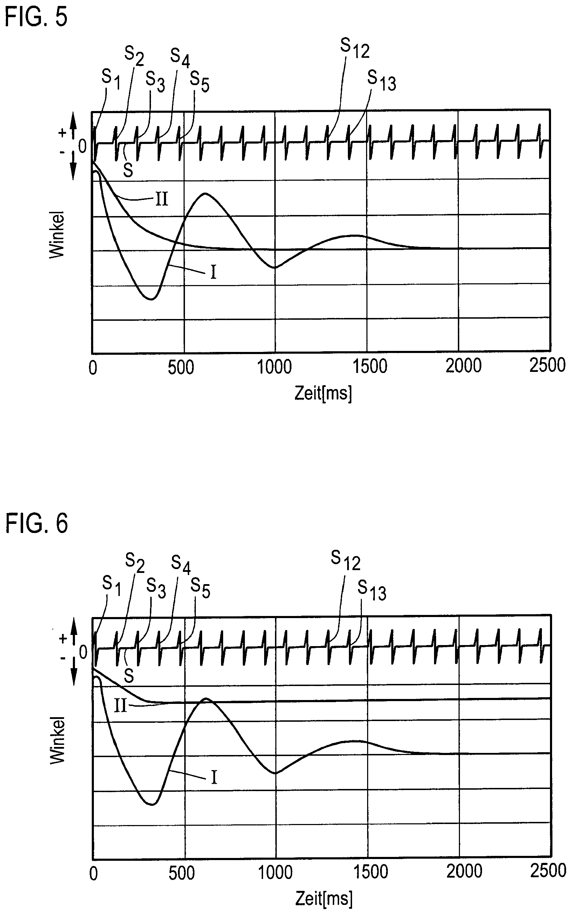

Fig. 5 zeigt ein Diagramm, das dem aus Fig. 4 entspricht. Gezeigt ist wiederum die ohne entsprechende Beeinflussung des Federverhaltens gegebene Schwingkurve I sowie die Schussfolgekurve S mit dem im Zeitpunkt t = 0 gegebenen ersten Schuss S₁ etc.

Anders als bezüglich Fig. 4 beschrieben, wird hier keine mechanische Blockierung oder Arretierung vorgenommen, sondern es wird, wie bezüglich Fig. 3 beschrieben, die Charakteristik des Stoßdämpfers verändert. Der Stoßdämpfer wird quasi härter eingestellt, was beispielsweise durch entsprechende Ansteuerung des Proportionalventils möglich ist, oder durch Veränderung der Viskosität einer magnetorheologischen Flüssigkeit etc. Da der Stoßdämpfer für die Bedämpfung der Schwingbewegung, die die Feder zulässt, verantwortlich ist, kann folglich durch eine entsprechende Dämpfercharakteristik die grundsätzliche Bewegung innerhalb der Radaufhängung 5 beeinflusst werden. Wie Fig. 5 zeigt, ist es nun möglich, durch entsprechende Einstellung der Dämpfercharakteristik ein Bewegungsverhalten gemäß der Kurve II zu erzielen. Aus der Kurve II ist ersichtlich, dass der Fahrzeugaufbau 2 mit Beginn des ersten Schusses und fortgesetzt über die Schüsse S₂, S₃, S₄ und S₅ etwas weiter, jedoch stetig weniger werdend nach hinten einnickt, bis er nach dem Schuss S₅ bereits näherungsweise eine konstante Einknickposition einnimmt. Trotz weiterer abgegebener Schüsse ändert sich an dieser Position nichts. Der Fahrzeugaufbau bewegt sich also stetig nach hinten in eine Endposition, ein Zurückschwingen ist trotz fortgesetzten Schießens nicht gegeben. Auch hier wird folglich dieser quasi-statische Zustand wesentlich früher erreicht als gemäß der Kurve I, wo dieser Zustand erst mit ungefähr dem dreizehnten Schuss S₁₃ erreicht wird.

Die Eigenschaften respektive Vorspannung etc. der Federn der Radaufhängungen 5 bleiben hierbei unverändert, lediglich die Dämpfung wird verändert. Da die Feder unbeeinflusst bleibt, entspricht der maximale Einknickwinkel gemäß Kurve II dem Einknickwinkel, wie er sich nach Einschwingen gemäß Kurve I einstellt.

Die gegebene Dämpferregelung kann auch über einen Bewegungssensor verfügen, der diese Einknickbewegung erfasst. Die Ausgestaltung kann derart sein, dass die Regelung ein sehr schnelles Einknicken zulässt, und den jeweiligen Dämpfer erst kurz vor Erreichen der bekannten Endposition verändert, so dass der quasi-statische Zustand möglichst schnell eingenommen wird.

Fig. 6 zeigt schließlich eine erfindungsgemäße Ausgestaltung, bei der, entsprechend Fig. 3, sowohl die Dämpfercharakteristik als auch die Federvorspannung respektive Federeigenschaft variiert wird. Die Feder 7 weist vorzugsweise ein Progressiv-Verhalten auf, d. h., dass die Federkraft überproportional mit dem Weg zunimmt. Wird die Feder folglich beispielsweise durch Verstellen des Federtellers 17 entsprechend komprimiert, so wird sie deutlich härter, es ist also mehr Kraft zum Einfedern einzuleiten. Gleichzeitig wird der jeweilige Dämpfer 6 entsprechend verändert. Dies ermöglicht es nun, dass, siehe Fig. 6, sich ein wesentlich flacherer Verlauf der Kurve II ergibt. Durch die Veränderung an der Feder kann diese nicht mehr allzu weit einfedern, die veränderte Dämpfercharakteristik schließt eine Sinusschwingung aus. Ersichtlich läuft hier die Kurve II bereits ab dem dritten Schuss S₃ in den quasi-statischen Zustand ein, wobei der Einknickwinkel deutlich kleiner ist als der Einknickwinkel im quasi-statischen Zustand gemäß Kurve I, der auch hier wiederum exemplarisch erst nach dem dreizehnten Schuss S₁₃ eingenommen wird.

Unabhängig davon, welche konkrete Maßnahme nun ergriffen wird, um das Fahrwerk zu versteifen, kann grundsätzlich eine "Beruhigung" der Bewegung des Fahrzeugaufbaus beim Schießen erreicht werden. Insbesondere ist es möglich, näherungsweise definierte, quasi-statische Verhältnisse sehr schnell zu erreichen. D. h., dass letztlich der Einknickgrad einigermaßen genau bestimmbar ist. Diese Kenntnis kann nun bereits bei der Vorbereitung des Schusses bzw. dem Ausrichten der Maschinenwaffe 3 berücksichtigt werden.

Wenngleich Fig. 1 ein Radfahrzeug zeigt, sind die gleichen Maßnahmen selbstverständlich auch bei einem Kettenfahrzeug vorsehbar. Die beiden Ketten laufen jeweils über Räder oder Rollen, die entsprechend aufgehängt sind. Im Bereich dieser Kettenradaufhängungen können nun gleichermaßen entsprechende Vorkehrungen zur Veränderung des Bewegungsverhaltens innerhalb der Radaufhängungen, wie zum Radfahrzeug 1 beschrieben, vorgesehen sein. In gleicher Weise kann hierüber das Nick- oder Wankverhalten des Kettenfahrzeugs definiert beeinflusst werden und auf schnelle Weise ein quasi-statischer Zustand erreicht werden. Weiterhin können anstelle von Schraubenfedern auch Luftfedern mit veränderbarem Druck vorgesehen sein.

## Patentansprüche

1. Rad- oder Kettenfahrzeug mit einer aufgebauten, Schüsse in schneller Abfolge abgebenden Maschinenwaffe, sowie einem fahrzeugseitig vorgesehenen Fahrwerk, über das eine Beweglichkeit des die Maschinenwaffe tragenden Fahrzeugaufbaus relativ zum Räder- oder Kettenwerk gegeben ist, wozu fahrwerkseitig mehrere ein Einfedern ermöglichende Rad- oder Kettenradaufhängungen vorgesehen sind,
**dadurch gekennzeichnet,**
**dass** nur zum Schießen das Einfederverhalten zumindest eines Teils der Rad- oder Kettenradaufhängungen (5) derart veränderbar ist, dass eine einfederbedingte Bewegung der Maschinenwaffe (3) reduziert wird,
wobei jede in ihrem Einfederverhalten veränderbare Rad- oder Kettenradaufhängung (5) eine Feder (7) aufweist, deren Vorspannung zur Veränderung des Einfederverhaltens veränderbar ist.

2. Rad- oder Kettenfahrzeug nach Anspruch 1,
wobei der als Schraubenfeder ausgebildeten Feder (7) wenigstens ein beweglicher Federteller (17) zugeordnet ist, der über ein Stellelement (18), insbesondere einen Elektromotor (19) mit zugeordnetem Gewindetrieb (20), zur stärkeren Komprimierung der Feder (7) bewegbar ist.

3. Rad- oder Kettenrad nach Anspruch 2,
wobei die Feder (7) ein Progressiv-Verhalten, wonach die Federkraft überproportional mit dem Weg zunimmt, aufweist.

4. Rad- oder Kettenfahrzeug nach einem der Ansprüche 1 bis 3,
wobei jede Rad- oder Kettenradaufhängung (5) einen Stoßdämpfer (6) aufweist, dessen Dämpfercharakteristik zur Veränderung des Einfederverhaltens automatisch veränderbar ist.

5. Rad- oder Kettenfahrzeug nach Anspruch 4,
wobei wenigstens ein Bewegungssensor vorgesehen ist, der eine Bewegung des Fahrzeugaufbaus (2) erfasst und abhängig von dessen Erfassungsergebnis die Dämpfercharakteristik veränderbar ist.

6. Rad- oder Kettenfahrzeug nach Anspruch 4 oder 5,
wobei der Maschinenwaffe (3) eine Stabilisierungsvorrichtung, mittels der die Maschinenwaffe (3) stabil in einer bestimmten räumlichen Ausrichtung haltbar ist, zugeordnet ist.

## Claims

1. Wheeled or tracked vehicle with a mounted machine gun which fires shots in rapid sequence and, provided on the vehicle, a running mechanism by means of which the vehicle body carrying the machine gun is made movable in relation to the wheel or chain mechanism, for which purpose a number of wheel or chain-wheel suspensions enabling compressive deflection are provided on the running mechanism,
**characterized in that**
just for firing, the compressive deflection behaviour of at least some of the wheel or chain-wheel suspensions (5) can be modified in such a way that a deflection-induced movement of the machine gun (3) is reduced,
wherein each wheel or chain-wheel suspension (5) that can be modified in its compressive deflection behaviour has a spring (7), the pre-tensioning of which can be varied to modify the compressive deflection behaviour.

2. Wheeled or tracked vehicle according to Claim 1,
wherein the spring (7), formed as a helical spring, is assigned at least one movable spring plate (17), which is movable by means of an adjusting element (18), in particular an electric motor (19) with an assigned threaded drive (20), for greater compression of the spring (7).

3. Wheeled or tracked vehicle according to Claim 2,
wherein the spring (7) has a progressive behaviour, on the basis of which the spring force increases disproportionately with the displacement.

4. Wheeled or tracked vehicle according to one of Claims 1 to 3,
wherein each wheel or chain-wheel suspension (5) has a shock absorber (6), the absorber characteristic of which is automatically variable to modify the compressive deflection behaviour.

5. Wheeled or tracked vehicle according to Claim 4,
wherein at least one movement sensor, which detects a movement of the vehicle body (2), is provided and the absorber characteristic is variable depending on the detection result of the sensor.

6. Wheeled or tracked vehicle according to Claim 4 or 5,
wherein the machine gun (3) is assigned a stabilizing device, by means of which the machine gun (3) can be kept stably in a specific spatial alignment.

## Revendications

1. Véhicule à roues ou à chenilles comprenant une arme automatique qui délivre des balles à une séquence rapide, ainsi qu'un train roulant présent du côté du véhicule, par lequel est apportée une mobilité de la carrosserie de véhicule qui supporte l'arme automatique par rapport au mécanisme à roues ou à chenilles, plusieurs suspensions de roue ou de roue à chaîne qui permettent un débattement étant présentes à cet effet du côté du train roulant,
**caractérisé en ce que**
le comportement de débattement d'au moins une partie des suspensions de roue ou de roue à chaîne (5) pouvant être modifié uniquement pour le tir de telle sorte qu'un mouvement de l'arme automatique (3) lié au débattement est réduit,
chaque suspension de roue ou de roue à chaîne (5) dont le comportement de débattement peut être modifié possédant un ressort (7) dont la précontrainte peut être modifiée en vue de modifier le comportement de débattement.

2. Véhicule à roues ou à chenilles selon la revendication 1, le ressort (7) réalisé sous la forme d'un ressort hélicoïdal étant associé à au moins une coupelle de ressort (17) mobile qui peut être déplacée par le biais d'un élément actionneur (18), notamment un moteur électrique (19) auquel est associé un mécanisme fileté (20), en vue d'une compression plus forte du ressort (7).

3. Véhicule à roues ou à chenilles selon la revendication 2, le ressort (7) présentant un comportement progressif selon lequel la force du ressort augmente de manière disproportionnée en fonction de la course.

4. Véhicule à roues ou à chenilles selon l'une des revendications 1 à 3, chaque suspension de roue ou de roue à chaîne (5) possédant un amortisseur (6) de chocs dont la caractéristique d'amortissement peut être modifiée automatiquement pour modifier le comportement de débattement.

5. Véhicule à roues ou à chenilles selon la revendication 4, au moins un détecteur de mouvement étant présent, lequel détecte un mouvement de la carrosserie de véhicule (2) et la caractéristique d'amortissement pouvant être modifiée en fonction du résultat de sa détection.

6. Véhicule à roues ou à chenilles selon la revendication 4 ou 5, l'arme automatique (3) étant associé à un dispositif de stabilisation au moyen duquel l'arme automatique (3) peut être maintenue de manière stable dans une orientation donnée dans l'espace.
